**Europäisches Patentamt**

**European Patent Office**

**Office européen des brevets**

(19)

(11) Publication number: **0 173 447**
A2

# EUROPEAN PATENT APPLICATION

(12)

(21) Application number: **85305227.2**

(22) Date of filing: **23.07.85**

(51) Int. Cl.⁴: **B 29 C 45/44,** B 29 C 33/52

(30) Priority: **24.07.84 GB 8418874**

(43) Date of publication of application: **05.03.86**
**Bulletin 86/10**

(84) Designated Contracting States: **AT BE CH DE FR GB IT LI LU NL SE**

(71) Applicant: **CLARKS LIMITED, Street, Somerset (GB)**

(72) Inventor: **Tazewell, Peter James, 68 King Ina Road, Somerton Somerset (GB)**

(74) Representative: **Brooke-Smith, Fred et al, STEVENS, HEWLETT & PERKINS 5 Quality Court Chancery Lane, London WC2A 1HZ (GB)**

(54) Hollow body injection moulding process using a soluble core.

(57) An article to be moulded from a thermoplastics material and to have therein a hollow of predetermined shape is made by attaching to the lid of a mould which has a cavity in the external shape of the article a block in the shape of the hollow, the block being suspended from the lid on pins. The thermoplastics material is injected into the mould and caused to set. The lid and pins are then removed. The block is made from a material, such as expanded polystyrene, for which there is a convenient solvent which does not also dissolve the said thermoplastics material. The solvent is poured into one of the passages left by the removal of the pins and the solution of the block in the solvent is pumped from the hollow through the passage left by the other pin. The method has a particularly useful application in the manufacture of moulded shoe sole units which incorporate a hollow for a cushion of air.

- 1 -      0173447

## CAVITY MOULDING

The invention relates to cavity moulding and more particularly, but not exclusively, to the cavity moulding of sole units for footwear.

According to the invention there is provided a method of manufacture of an article by cavity moulding including the steps of supporting a block in the cavity of a cavity mould by support means, which cavity is in the external shape of the article to be moulded, injecting a flowable, settable thermoplastics material into the cavity, allowing or causing the thermoplastics material to set and form said article about the block, applying to the block a solvent which dissolves the block, but not the thermoplastics material, and removing the resulting solution thereby to define within the thermoplastics material a hollow in the shape of the block.

According to a preferred feature of the invention said support means comprises one or more pins, each pin having one end attached to a section of the cavity mould and its other end attached to the block, said pin or pins being removable from the block to leave a passage or passages extending through the thermoplastics material and into the block, said solvent being introduced to said block and said solution being removed by way of said passage or passages.

According to another preferred feature of the invention, particularly where the article is a sole unit for footwear, the thermoplastics material may be polyurethane and the block may be of expanded polystyrene.

One embodiment of the invention will now be described by way of example. The description makes reference to the accompanying drawings in which:

Figure 1 is a cross-section through a cavity mould for use in a method according to the present invention;

Figure 2 is a cross-section through the cavity mould of Figure 1 after the introduction of a thermoplastics material;

Figure 3 is a cross-section through the article removed from the mould of Figure 2;

Figure 4 is a cross-section through the article of Figure 3 after treatment with a solvent; and

Figure 5 is a cross-section through a finished article.

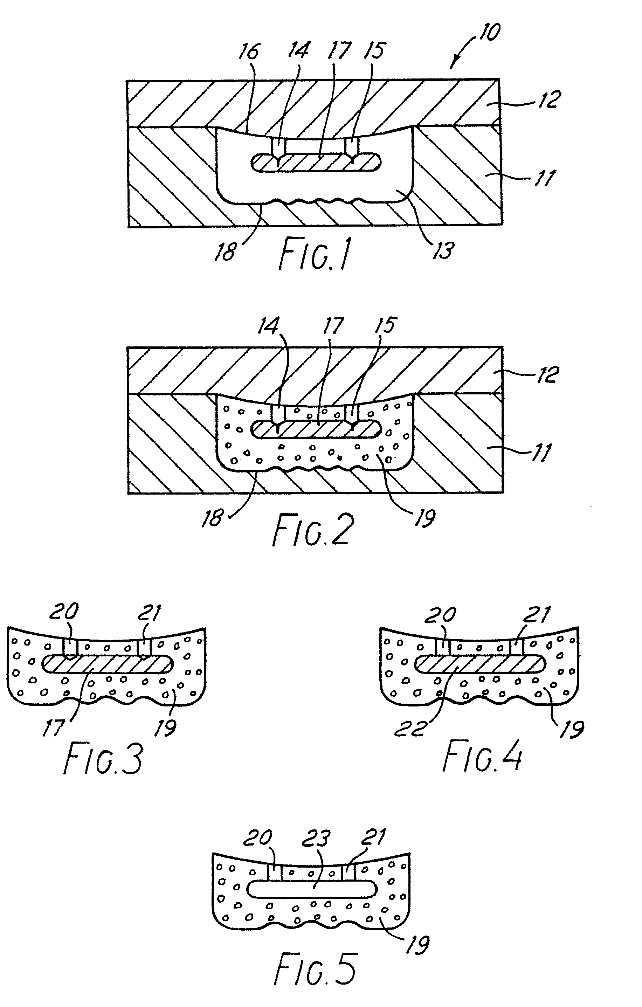

Referring to Figures 1 and 2, a cavity mould 10 comprises a lower section 11 and an upper section 12 which sections, when placed together, define a cavity 13 therebetween in the external shape of a sole unit for footwear. The cavity 13 is thus bounded by the underside 16 of the upper section 12 and the surface 18 of the lower section 11. Pins 14, 15 are provided, each of which pins has one end secured to the underside 16 of the upper section 12 and projects into the cavity 13. A block 17 made form a low density expanded material such as expanded polystyrene is attached to the other ends of the pins 14, 15 and is thus suspended inside the cavity, spaced from the underside 16 of the upper section 12 and from the surface 18 of the lower section 11.

With the upper section 12 secured in position on top of the lower section 11, a flowable, settable thermoplastics material, such as polyurethane, is injected into the cavity 13 in a conventional manner. The thermoplastics material completely surrounds the exposed surface of the block 17. The thermoplastics material, upon setting, is in the form of a sole unit 19 and is removed from the mould by the lifting of the upper section 12 to which the sole unit 19 is attached by the pins 14, 15.

Referring to Figures 3 to 5, the pins 14, 15, and thus the upper section 12, are removed from the sole unit 19 leaving two passages 20, 21 which extend into the block 17.  A solvent for the low density material of the block is introduced into the orifice 20 and dissolves the block 17 to form a solution 22.  The solvent in the present instance is 111 trichloroethane.  The resulting solution 22 is extracted by vacuum means (not shown) through the passage 21 to define a hollow 23 having the dimensions of the original block 17.

The sole unit 19 can be overlaid with an impervious membrane, such as an inner sole, sealed with respect to the edges of th hollow thus providing an air cushion of known geometric proportions in the sole unit. The geometry of the block 17, however, is such that the geometry of the hollow 23 provides the majority (for example 90%) of the support to the wearer.  The sealing of the hollow, although desirable, is therefore not essential.

The hollow 23 will generally be formed in the heel portions of the sole units but may additionally or alternatively be formed in the foreparts of the sole units depending on the overall degree of cushioning required.

The above described process is for a sole unit but the process can also be adapted to the direct moulding of a hollow sole unit onto an upper.  In the direct moulding process, the lid or upper section 12 of the mould is constituted by a shoe upper attached to a making last, the block or blocks being supported by pins attached to the underside of the last.  When the thermoplastics material has been injected into the cavity and has set the making last with its attached pins is withdrawn from the upper and moulded-on sole unit, and the solvent is, as before introduced through one of the holes left by the pins and the solution is withdrawn through the other, leaving the cavity in the designed shape.

CLAIMS

1. A method of manufacture of an article by cavity moulding including the steps of supporting a block in the cavity of a cavity mould by support means, which cavity is in the external shape of the article to be moulded, injecting a flowable, settable thermoplastics material into the cavity, allowing or causing the thermoplastics material to set and form said article about the block, applying to the block a solvent which dissolves the block, but not the thermoplastics material, and removing the resulting solution thereby to define within the thermoplastics material a hollow in the shape of the block.

2. A method as claimed in Claim 1, wherein said support means comprises one or more pins, each pin having one end attached to a section of the cavity mould and its other end attached to the block, said pin or pins being removable from the block to leave a passage or passages extending through the thermoplastics material and into the block, said solvent being introduced to said block and said solution being removed by way of said passage or passages.

3. A method as claimed in Claim 1, wherein the thermoplastics material is polyurethane.

4. A method as claimed in Claim 1, wherein the block is made from expanded polystyrene.

5. A method as claimed in Claim 4, wherein the solvent is 111 trichloroethane.

6. A method as claimed in Claim 2, wherein said block is supported by said pins on a making last which causes also a shoe upper, said last and shoe upper together constituting a closure means for the cavity, said article being a sole unit and being moulded directly on to said upper.

FIG.1

FIG.2

FIG.3

FIG.4

FIG.5